# EUROPÄISCHE PATENTSCHRIFT

(11) **EP 2 885 356 B1**
(45) Veröffentlichungstag und Bekanntmachung des Hinweises auf die Patenterteilung: **19.07.2017**
(21) Anmeldenummer: 13756310.2
(22) Anmeldetag: 14.08.2013
(51) Int. Cl.: C09D 5/22, F21K 2/00, G09F 13/20, B29L 31/00, B29K 69/00, B29C 51/00, B29C 51/12, B29C 51/30, B29L 9/00, F21W 101/06, F21W 111/00

(54) **VERFAHREN ZUM HERSTELLEN EINER FLUCHTWEGMARKIERUNG FÜR FLUGZEUGE SOWIE EINE SOLCHE**
METHOD FOR PRODUCING AN ESCAPE ROUTE MARKING FOR AIR PLANES, AND SAID ESCAPE ROUTE MARKING
PROCÉDÉ POUR RÉALISER UN MARQUAGE DE CHEMIN DE FUITE POUR DES AVIONS ET MARQUAGE LUI-MÊME

(30) Priorität: 14.08.2012 DE 102012016046
(43) Veröffentlichungstag der Anmeldung: 24.06.2015
(73) Patentinhaber: Lufthansa Technik AG, 22335 Hamburg (DE); Biehl, Torben, 22081 Hamburg (DE); Lierow, Hans-Christian, 22339 Hamburg (DE)
(72) Erfinder: BIEHL, Torben, 22081 Hamburg (DE); LIEROW, Hans-Christian, 22339 Hamburg (DE)
(74) Vertreter: Hauck Patentanwaltspartnerschaft mbB
(86) Internationale Anmeldenummer: PCT/EP2013/002444
(87) Internationale Veröffentlichungsnummer: WO 2014/026764

(56) Entgegenhaltungen:
- EP-A1- 1 987 861
- WO-A1-2008/110344
- WO-A1-2009/106342
- GB-A- 2 448 424

## Beschreibung

Die vorliegende Erfindung betrifft ein Verfahren zum Herstellen einer Fluchtwegmarkierung für Flugzeuge und eine nach dem Verfahren hergestellte Fluchtwegmarkierung.

Fluchtwegmarkierungen sind in Notfallsituationen, in denen die Stromversorgung nicht immer gewährleistet werden kann, von besonderer Bedeutung. Es ist bekannt zur Fluchtwegmarkierung in Flugzeugen, die auch als Notfallmarkierung bezeichnet wird, photolumineszente Streifen am Fußboden im Innenbereich des Flugzeugs anzuordnen. Photolumineszenz wird gelegentlich auch als Nachleuchten und/oder Phosphorisieren bezeichnet. Die sicherheitstechnischen Anforderungen sind beispielsweise in der Deutschen Industrie Norm DIN 67 510 spezifiziert. Die Streifen werden geradlinig auf dem Fußboden verlegt und weisen den Passagieren und der Besatzung im Notfall den Weg zu den Ausgängen und Notausstiegen. In der Vergangenheit haben sich bei der Ausgestaltung von Flugzeugen zunehmend photolumineszente Streifen durchgesetzt, da diese ausfallsicher sind und ohne Stromversorgung betrieben werden können.

Aus WO 96/33093 A1 ist beispielsweise eine Notfallbeleuchtung bekannt, bei der ein photolumineszenter Streifen in einem transparenten Trägerelement angeordnet ist. Das Trägerelement kann dabei ein-, zwei- oder dreistückig ausgebildet sein. Jedes Trägerelement besitzt eine langgestreckte rechteckige Form und kann dementsprechend in einer 90°- und 180°-Orientierung zu einem anderen Trägerelement verlegt werden.

Aus WO 94/17766 A1 ist eine photolumineszente Reflektorschicht bekannt. Es wird vorgeschlagen, aus dem flächigen Material längliche Streifen herzustellen.

Aus US 4,401,050 ist eine photolumineszente Fluchtwegmarkierung bekannt, die aus länglichen Streifen besteht. Als Richtungsanzeiger für den markierten Fluchtweg sind Pfeile vorgesehen.
Aus WO 87/02813 A1 sind Richtungsanzeiger für den Fluchtweg bekannt, die mit photolumineszenten Mitteln arbeiten, die entlang des Gangs des Flugzeugs als einzelne unverbundene Pfeile am Fußboden angeordnet sind.
Aus EP 0 489 561 A1 ist eine dauerhaft fluoreszierende Lage bekannt, bei der Farbpigmente in eine Polymermatrix eingebunden sind. Hierbei kann das fluoreszente Material in einem Träger eingebunden sein, der dem Fluoreszerislicht durch zusätzliche Filter verschiedene optische Eigenschaften verleiht.
Aus FR 2 308 155 A1 sind mit photolumineszentem Material hinterlegte Sicherheitsschilder bekannt.
US 4,208,300 beschreibt eine Zusammensetzung für photolumineszentes Material, wie es an Treppenwegen und im Straßenverkehr verwendet werden kann.

Aus der WO 2008/110343 A1 und der WO 2008/110344 A1 ist eine Fluchtwegmarkierung für Flugzeuge bekannt, die ein nachleuchtendes, photolumineszentes Material aufweist, dass in mehreren Elementen auf dem Fußboden verlegt ist, wobei mindestens ein Element eine gebogene Form besitzt.

WO 2009/106342 A1 offenbart mittels Formgiessen oder Spritzgiessen gebogene Ausführungsformen einer Fluchtwegmarkierung.

Die EP 08 28 657 B2 beschreibt eine Fluchtwegmarkierung, die zwei dünne Schichten aus photolumineszenten Material aufweist, um die Lichtemission zu erhöhen. Die Lichttransmission durch das photolumineszente Material wird durch eine bedruckte oder gefärbte stellenweise lichtdurchlässige Abdeckung oder durch einen Farbfilter unterhalb der Abdeckung verändert.

Gegenwärtig ist festzustellen, dass die Anforderungen an die Gestaltung bei der Möblierung des Fluggastinnenraums sich ändern. Insbesondere geht ein Trend dahin, nicht länger rechtwinklige Möbel vorzusehen, sondern auch geschwungene Möbelkonturen einzusetzen. Neben der ästhetischen Wirkung einer geschwungenen Möblierung, beispielsweise Sitzbänken mit geschwungener Außenkontur, Schränke und Theken im Servicebereich, besitzen geschwungene Möbel auch sicherheitstechnische Vorzüge, da die Passagiere sich beispielsweise weniger leicht verletzen können. Die zunehmend aufwendiger gestaltete Möblierung inklusive ihres Polsterdesign in dem Passagierraum macht es notwendig, auch die Fluchtwegmarkierung flexibel in der Form anpassen zu können.

Der vorliegenden Erfindung liegt die Aufgabe zugrunde, ein Verfahren zum Herstellen einer Fluchtwegmarkierung und eine mit dem Verfahren hergestellte Fluchtwegmarkierung bereitzustellen, das bzw. die mit einfachen Mitteln an unterschiedliche Anforderungen bei Gestaltungen im Passagierraum eines Flugzeugs in der Form anpassbar sind.

Erfindungsgemäß wird die Aufgabe durch ein Verfahren zum Herstellen einer Fluchtwegmarkierung gemäß Anspruch 1 und einer mit dem erfindungsgemäßen Verfahren hergestellten Fluchtwegmarkierung gemäß Anspruch 11 gelöst. Vorteilhafte Ausgestaltungen bilden jeweils die Gegenstände der Unteransprüche.

Das erfindungsgemäße Verfahren zum Herstellen einer Fluchtwegmarkierung sieht die Verwendung einer erwärmbaren und verformbaren Stützform vor. Das Verfahren zur Herstellung umfasst folgende Schritte: Die erwärmbare und verformbare Stützform wird bereitgestellt, so dass ein Trägerelement in die Stützform eingebracht werden kann. Ein photolumineszentes Material und eine lichtdurchlässige Abdeckung werden auf dem Trägerelement in der Stützform angeordnet. Nach Anordnungen der Fluchtwegmarkierung mit ihren verschiedenen Schichten in der Stützform wird die Stützform zusammen mit der Fluchtwegmarkierung erwärmt und bevorzugt anschließend an die Erwärmung verformt. In der verformten Position erstarrt die Fluchtwegmarkierung in der Stützform. Durch Verwendung einer Stützform, welche einerseits den thermischen Veränderungen gegenüber widerstandsfähig ist und andererseits gut verformbar ist, kann die Herstellung der Fluchtwegmarkierung wesentlich vereinfacht werden. Durch Verwendung der Stützform können die aufeinander angeordneten Teile der Fluchtwegmarkierung sich nur unwesentlich zueinander verrücken, wodurch die Herstellung schneller und passgenauer durchgeführt werden kann. Eine mit dem erfindungsgemäßen Verfahren hergestellte Fluchtwegmarkierung ist auf dem Fußboden eines Flugzeuges und/oder entlang der Konturen des Mobiliars im Flugzeug verlegbar. Das photolumineszente Material der Fluchtwegmarkierung zeigt im Notfall den Passagieren und der Besatzung den kürzesten Weg zu einem Notausgang. Die Fluchtwegmarkierungen lassen sich ferner in die Ästhetik der Innenausstattung des Flugzeuges besser integrieren, ohne die sicherheitstechnischen Anforderungen zu beeinträchtigen.

In einer zweckmäßigen Ausgestaltung des Verfahrens werden das photolumineszente Material und die lichtdurchlässige Abdeckung auf dem Trägerelement übereinander in der Stützform angeordnet oder diese werden bereits aufeinander angeordnet in die Stützform eingebracht.

Besonders bevorzugt werden Stützformen verwendet, die aus Silikon gefertigt sind, wobei nach dem Erstarren in der Stützform die Stützform in ihre nicht verformte Ausgangslage zurückkehrt und die Fluchtwegmarkierung in ihrer verformten Position verbleibt. Silikonformen sind besonders resistent, als auch flexibel verformbar und zugleich ausreichend robust. Ferner ist ein aneinander Haftenbleiben der aufeinander angeordneten Schichten an der Silikonform aufgrund der Eigenschaften des Silikons ausgeschlossen. Dadurch, dass die Stützform nach dem Erstarren in ihre nicht verformte Ausgangslage zurückkehrt, kann die Stützform für die Herstellung weiterer Fluchtwegmarkierungen wiederverwendet werden, wodurch eine solche Stützform ökonomisch einsetzbar ist.

Gemäß einer besonders bevorzugten Ausgestaltung des Verfahrens wird die Fluchtwegmarkierung in der Stützform zunächst in der Stützform erwärmt und zum Verformen und/oder Erstarren in eine Erstarrungsvorrichtung angeordnet. Die Erstarrungsvorrichtung ist zur Unterstützung der Stützform vorgesehen und erlaubt es, die aufeinander angeordneten Teile in der Stützform gleichmäßig fixiert auskühlen zu lassen.

In einer zweckmäßigen Ausgestaltung des Verfahrens ist die Erstarrungsvorrichtung als eine vorgefertigte Erstarrungsform vorgesehen. Die vorgefertigte Erstarrungsform ist im Vergleich zur Stützform stabiler und im Wesentlichen nicht verformbar. Eine geringe Elastizität der Erstarrungsform ist für das Anordnen der erwärmten Stützform in die Erstarrungsform von Vorteil.

Eine andere zweckmäßige Ausgestaltung sieht vor, dass die Erstarrungsvorrichtung als eine Umformvorrichtung mit einer Steuereinheit ausgebildet ist. Eine mit einer Steuereinheit ausgebildete Umformvorrichtung ist vorzugsweise programmierbar, wodurch beliebige Verformungen über die Steuereinheit eingestellt werden können.

Zu einer besseren Handhabung der Verformung ist bevorzugt vorgesehen, dass die Umformungsvorrichtung eine Vielzahl an parallel angeordneter Stäbe aufweist, welche durch die Steuereinheit entlang ihrer Längsrichtung verschiebbar sind, um die Fluchtwegmarkierung in die vorbestimmte Position zu bringen. Die Verwendung einer Vielzahl an parallel angeordneter Stäbe erlaubt es, individuelle Verformungen der Stützform und der darin angeordneten Fluchtwegmarkierung herbeizuführen. Auch das Einsetzen der Stützform in die Umformungsvorrichtung wird wesentlich vereinfacht, indem die Stäbe entlang ihrer Längsrichtung zunächst über die Steuereinheit zurückgefahren werden, so dass die Stützform bequem einsetzbar ist.

In einer zweckmäßigen Ausgestaltung des Verfahrens werden erst nach dem Einsetzen der erwärmten Stützform die Stäbe in die die Verformung bildende bestimmte Position verfahren, so dass die erwärmte Stützform inklusive der darin angeordneten Fluchtwegmarkierung auskühlen und letztere erstarren kann. Nach dem Erstarren können die Stäbe der Umformungsvorrichtung aus ihrer Verformungsposition in eine Position überführt werden, die es erlaubt, die Stützform und die in der Stützform erstarrte Fluchtwegmarkierung einfach aus der Umformungsvorrichtung zu entnehmen.

Eine weitere Ausgestaltung des Verfahrens sieht vor, dass die lichtdurchlässige Abdeckung einen thermisch verformbaren Kunststoff, bevorzugt Polycarbonat, umfasst. Polycarbonate sind Kunststoffe, die sowohl eine Glasübergangstemperatur als auch eine Schmelztemperatur besitzen. Unterhalb der Glasübergangstemperatur, auch Erweichungstemperatur genannt, befindet sich die amorphe Phase des Polycarbonats in einem erstarrten Zustand, während sich oberhalb der Glasübergangstemperatur das Polycarbonat in einem gummielastischen Zustand befindet. Im gummielastischen Zustand liegt das Polycarbonat erweicht vor und kann entsprechend verformt werden. Bei Temperaturen oberhalb der Schmelztemperatur liegt das Polycarbonat in einer flüssigen Phase vor, in der es vorzugsweise mit Farbpigmenten oder anderen Substanzen vermischt werden kann. Polycarbonate sowie andere Kunststoffe können folglich einerseits in einem Temperaturbereich besonders gut mit anderen Substanzen vermischt werden und in einem anderen Temperaturbereich thermisch verformt werden.

Gemäß einer weiteren Ausgestaltung des Verfahrens sind das Trägerelement und/oder das photolumineszente Material und/oder die lichtdurchlässige Abdeckung jeweils alleine oder zusammen aufeinanderliegend thermisch verformbar. Thermisch verformbare Materialien sind individuell verformbar, wodurch sie den Konturen des Mobiliars im Innenraum eines Flugzeuges einfacher und besser angepasst werden können. Werden das Trägerelement und/oder das photolumineszente Material und/oder die lichtdurchlässige Abdeckung zusammen aufeinanderliegend thermisch verformt, können mögliche Verschiebungen der Schichten untereinander oder zueinander vermieden werden.

Die Fluchtwegmarkierung hergestellt mit dem erfindungsgemäßen Verfahren weist eine lichtdurchlässige Abdeckung und ein photolumineszentes Material auf. Eine solche Fluchtwegmarkierung ist auf dem Fußboden und/oder entlang der Konturen des Mobiliars im Flugzeug verlegbar. Das photolumineszente Material der Fluchtwegmarkierung zeigt im Notfall den Passagieren und der Besatzung den kürzesten Weg zu einem Notausgang. Erfindungsgemäß weist die lichtdurchlässige Abdeckung Farbpigmente auf, welche zu einer lichtdurchlässigen Einfärbung der Fluchtwegmarkierung führen. Die lichtdurchlässige Abdeckung kann durch die Farbpigmente farblich dem Mobiliar im Flugzeug angepasst werden, wodurch die Fluchtwegmarkierungen sich in die Ästhetik der Innenausstattung des Flugzeuges besser integrieren lassen, ohne die sicherheitstechnischen Anforderungen zu beeinträchtigen. Ferner können für unterschiedliche Innenausstattungen verschiedener Flugzeuge unterschiedlich farbige Farbpigmente eingesetzt werden, so dass die lichtdurchlässigen Abdeckungen der Fluchtwegmarkierungen entsprechend angepasst werden können. Bei aus dem Stand der Technik bekannten Fluchtwegmarkierungen, die farblich angepasst waren, konnten diese nicht ohne weiteres verformt werden, da auf den Leuchtstreifen beispielsweise Folienstreifen angeordnet wurden. Beim Verformen eines solchen Folienstreifens wäre die Folie zerknittert oder sogar eingerissen.

In einer bevorzugten Ausgestaltung weist die Fluchtwegmarkierung mindestens einen nicht linearen Streckenabschnitt mit einem oder mehreren Radien auf. Fluchtwegmarkierungen mit nicht linearen Streckenabschnitten können in Bögen und Kurven verlaufen. Hierdurch kann die Fluchtwegmarkierung individuell an die Ausgestaltungen des Flugzeuginnenraums angepasst werden und dabei vorgegebene Konturen, insbesondere des Mobiliars, folgen. Mit nicht linearen Streckenabschnitten werden streifenförmige Abschnitte der Fluchtwegmarkierung bezeichnet, die in der Ebene, in der sie verlegt sind, sich nicht gradlinig erstrecken, sondern einen Bogen beschreiben.

Gemäß einer Ausgestaltung weist die Fluchtwegmarkierung mindestens einen geschwungenen Abschnitt mit einander entgegengesetzten Krümmungen auf. Die mit dem erfindungsgemäßen Verfahren hergestellte Fluchtwegmarkierung ist mit entgegengesetzten Krümmungen insbesondere mit linksgekrümmten und rechtsgekrümmten Abschnitten herstellbar, wodurch beliebig gebogene Fluchtwegmarkierungen mit glatten Übergängen entstehen. Bedingt durch die entgegengesetzten Krümmungen weisen geschwungene Abschnitte entlang ihrer Kontur einen Wendepunkt auf, an dem eine Rechts- oder Linkskrümmung in eine Links- bzw. Rechtskrümmung übergeht.

Gemäß einer bevorzugten Ausgestaltung weist die lichtdurchlässige Abdeckung einen thermisch verformbaren Kunststoff, bevorzugt Polycarbonat, auf. Polycarbonate sind Kunststoffe, die sowohl eine Glasübergangstemperatur als auch eine Schmelztemperatur besitzen. Unterhalb der Glasübergangstemperatur, auch Erweichungstemperatur genannt, befindet sich die amorphe Phase des Polycarbonats in einem erstarrten Zustand, während sich oberhalb der Glasübergangstemperatur das Polycarbonat in einem gummielastischen Zustand befindet. Im gummielastischen Zustand liegt das Polycarbonat erweicht vor und kann entsprechend verformt werden. Bei Temperaturen oberhalb der Schmelztemperatur liegt das Polycarbonat in einer flüssigen Phase vor, in der es vorzugsweise mit Farbpigmenten vermischt werden kann. Polycarbonate können folglich einerseits in einem Temperaturbereich besonders gut eingefärbt werden und in einem anderen Temperaturbereich thermisch verformt werden.

In einer bevorzugten Ausgestaltung ist das photolumineszente Material in Form von Streifen mit einer Länge und einer Breite vorgesehen, die den Abmaßen der lichtdurchlässigen Abdeckung entsprechen. Die photolumineszenten Streifen können beispielsweise photolumineszente Pigmente aufweisen, die in einer Polymermatrix, bevorzugt in einer Silikon- oder Polycarbonatmatrix, eingebunden sind.

Gemäß einer bevorzugten Ausgestaltung ist auf oder in einem Trägerelement das photolumineszente Material in Form eines den Abmaßen des Trägerelements entsprechenden Streifens und darauf die lichtdurchlässige Abdeckung angeordnet. Die lichtdurchlässige Abdeckung bietet somit einen Schutz für das photolumineszente Material vor Beschädigungen und Feuchtigkeit.

In einer zweckmäßigen Ausgestaltung der Fluchtwegmarkierung ist eine Grundfläche des Trägerelements rechteckig ausgebildet, wobei sich entlang jeder Begrenzung der Grundfläche Seitenwände mit einer Dicke D in einem Winkel zu der Grundfläche erstrecken, wodurch eine Ausnehmung in dem Trägerelement gebildet ist. Bevorzugt stehen die Seitenwände senkrecht zu der Grundfläche. In einer solchen Ausnehmung kann ein photolumineszentes Material sicher vor Verrutschen platziert werden.

In einer zweckmäßigen Ausgestaltung der Fluchtwegmarkierung weist die lichtdurchlässige Abdeckung eine rechteckige Grundfläche auf, die in einem Abstand von der Begrenzung der Grundfläche sich in einem Winkel erstreckende Vorsprünge in Form von Seitenwänden mit einer Dicke D' aufweist, wobei die Vorsprünge so ausgebildet sind, dass ihre Außenseiten an den Innenseiten der Seitenwände des Trägerelements anliegen und zwischen lichtdurchlässiger Abdeckung und Trägerelement ein Hohlraum zur Aufnahme des photolumineszenten Materials gebildet wird, wenn die lichtdurchlässige Abdeckung auf dem Trägerelement aufgesetzt ist.

Gemäß einer bevorzugten Ausgestaltung der Fluchtwegmarkierung sind die lichtdurchlässige Abdeckung und das Trägerelement als einstückiges Hohlprofil ausgebildet. Ein photolumineszenter Leuchtstreifen kann dann in das Hohlprofil eingebracht werden, bevorzugt durch Einspritzen oder Eingießen einer Silikon- oder Polycarbonatmasse, in der die photolumineszenten Pigmente eingearbeitet sind.

Bevorzugte Ausführungsbeispiele werden nachfolgend anhand der Figuren näher erläutert. Es zeigen:
- Fig. 1: eine Ansicht eines geraden, farbigen Leuchtstreifens mit eingefärbter Abdeckung,
- Fig. 2: eine Querschnittsdarstellung eines geraden, farbigen Leuchtstreifens mit eingefärbter Abdeckung,
- Fig.3A: eine Querschnittsdarstellung eines geraden, farbigen Leuchtstreifens gemäß Fig. 2 in einer ersten Stützform,
- Fig. 3B: eine Querschnittsdarstellung einer zweiten Stützform,
- Fig. 4: eine vorgefertigte Form, in die eine Stützform eingesetzt ist,
- Fig. 5: eine Umformungsvorrichtung mit einer Vielzahl an Stäben, wobei in der Umformungsvorrichtung eine Stützform eingesetzt ist und
- Fig. 6: eine Draufsicht einer individuell in der Ebene verformte Fluchtwegmarkierung.

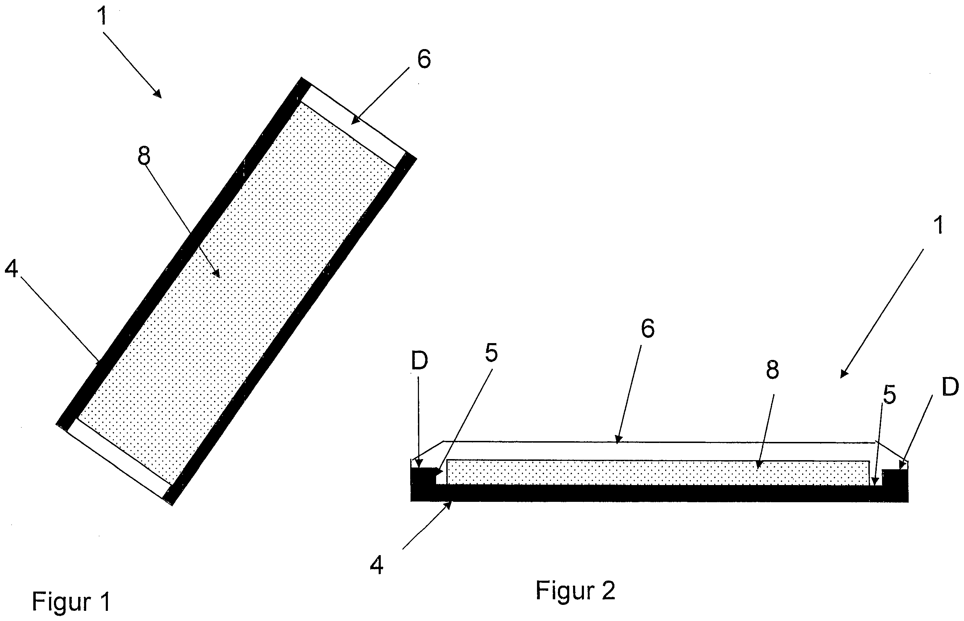

Fig. 1 zeigt eine Fluchtwegmarkierung 1 in gerader Form mit einer eingefärbten lichtdurchlässigen Abdeckung 6. Unter der eingefärbten lichtdurchlässigen Abdeckung 6 ist ein nachleuchtendes, photolumineszentes Material 8 angeordnet, das wiederum auf einem Trägerelement 4 flächig aufliegend angeordnet ist. Das photolumineszente Material ist gemäß Fig. 1 in einem transparenten Trägerelement vorgesehen. Das Trägerelement kann transparent ausgebildet, kann aber auch nicht durchscheinend ausgebildet sein, wenn es im verlegten Zustand der Fluchtwegmarkierung mit dem Untergrund verbunden ist. Alternativ kann das photolumineszente Material auch in das transparente Trägerelement eingegossen sein. Das photolumineszente Material kann dann beispielsweise aus photolumineszenten Pigmenten bestehen, die in einer Polymermatrix, bevorzugt einer Silikon- oder Polycarbonatmatrix, eingebunden sind.

Fig. 2 zeigt eine Querschnittsdarstellung der Fluchtwegmarkierung gemäß Fig. 1. In dem Querschnitt ist zu erkennen, dass das Trägerelement 4 eine Ausnehmung 5 aufweist, in die das photolumineszente Material 8 eingesetzt ist. Gemäß Fig. 2 sind die Abmaße des photolumineszenten Materials 8 geringfügig kleiner als die Ausnehmung 5 des Trägerelements 4 ausgebildet, so dass seitlich eine sich in Längsrichtung erstreckende Fuge ergibt, in die die Seitenwände der Abdeckung eintauchen. Eine Abdeckung 6 ist auf das photolumineszente Material 8 aufgebracht und schließt seitlich mit dem Rand des Trägerelements 4 ab. Die Fugen zwischen den Rändern der photolumineszenten Materials 8 und den Rändern der Ausnehmung 5 sind mit den Vorsprüngen der Abdeckung 6 ausgefüllt. Alternativ kann das photolumineszente Material 9 passgenau auf die Ausnehmung 5 des Trägerelements 4 zugeschnitten sein. Bei dieser Alternative weist die rechteckförmige Abdeckung keine Vorsprünge auf, sondern ist beispielsweise mit dem Trägerelement verklebt oder verschweißt. Das Verkleben oder Verschweißen von Abdeckung und Trägerelement kann durchgeführt werden bevor oder nachdem ein Leuchtstreifen in das Trägerelement angeordnet wurde. Wird der Leuchtstreifen erst nach dem Verkleben oder Verschweißen in das aus Abdeckung und Trägerelement gebildete Hohlprofil eingebracht, kann dies vorzugsweise durch Einbringen einer die photolumineszenten Pigmente enthaltende Silikon- oder Polycarbonatmasse geschehen.

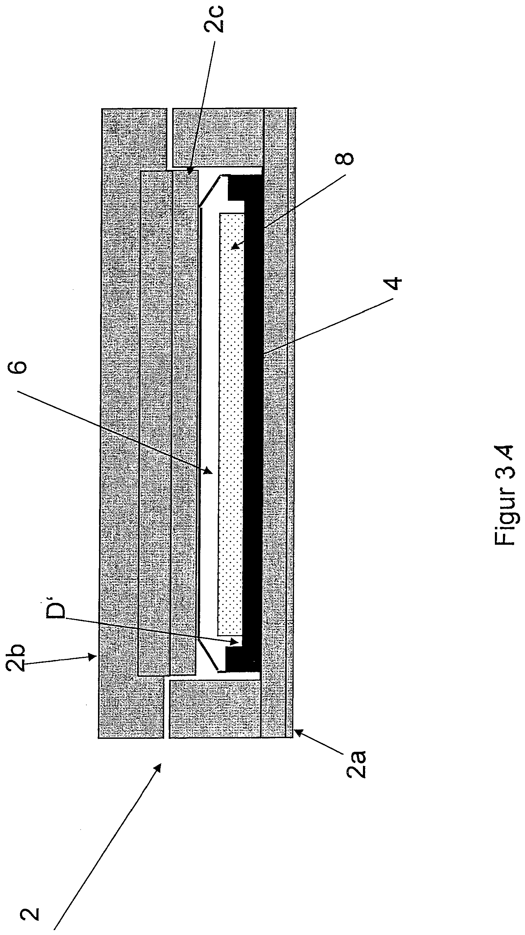

Fig. 3A zeigt die gerade Fluchtwegmarkierung aus Fig.2, eingefügt in eine Stützform 2. Die Stützform 2 weist einen topfförmigen Körper 2a auf, in dem die gerade Fluchtwegmarkierung eingesetzt ist. Ferner weist die Stützform 2 einen Deckel 2b mit einem stempelförmigen hervorstehenden Teil 2c auf. Der stempelartige Vorsprung 2c ermöglicht es, die Oberfläche der Fluchtwegmarkierung durch die Einwirkung der Gewichtskraft des Deckels 2b planar auszubilden. Sind die Teile 4, 6 und 8 in die Stützform 2 eingebracht, so wird die Stützform inklusive der eingebrachten Schichten auf eine Temperatur erwärmt. Vorzugsweise wird die Stützform auf eine Temperatur erwärmt, die oberhalb der Glasübergangstemperatur, jedoch unterhalb der Schmelztemperatur der verwendeten Materialien liegt. Zur Temperierung der Stützform kann ein Thermoelement in der Stützform angeordnet werden, das an oder in der photolumineszenten Masse angeordnet ist.

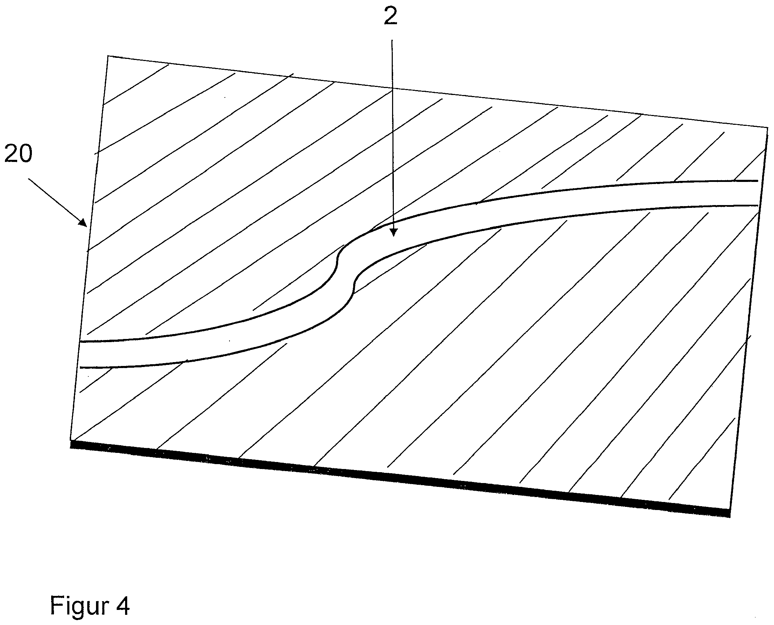

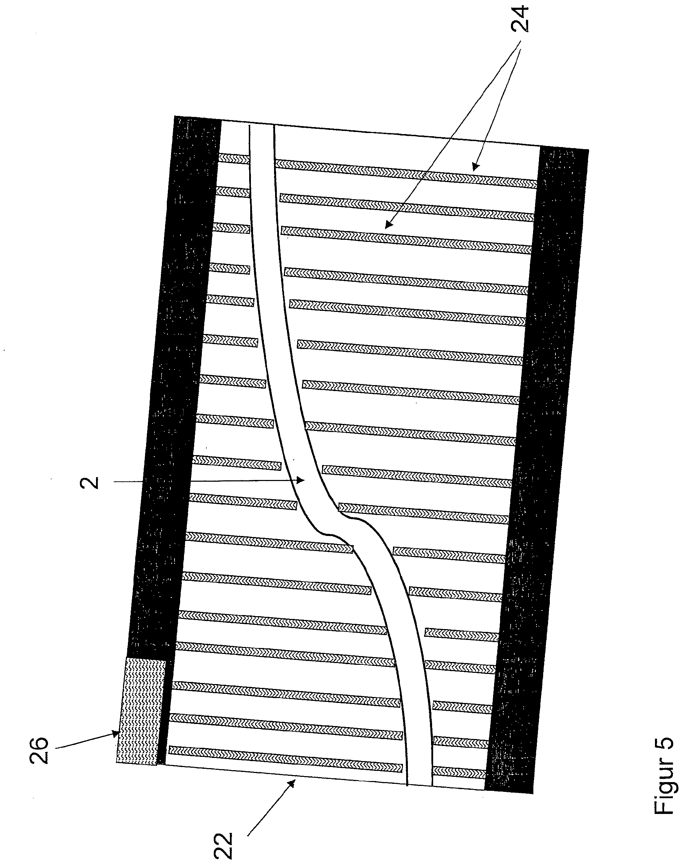

Nach dem Erwärmen wird die Stützform 2 entweder in eine vorgefertigte Erstarrungsform gemäß Fig. 4 eingesetzt oder in eine Umformungsvorrichtung 22 gemäß Fig. 5.

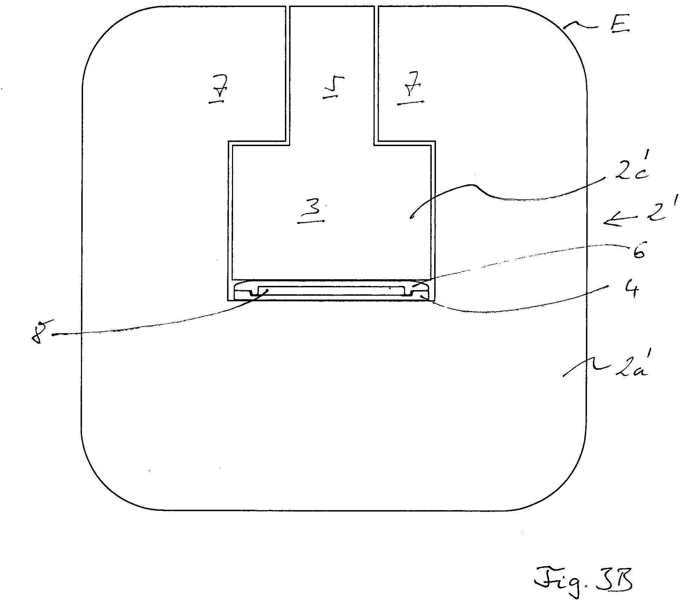

Fig. 3B zeigt eine alternative Ausgestaltung einer Stützform 2'. Die Stützform 2' besitzt einen topfförmigen Körper 2a', in dem die Fluchtwegmarkierung mit ihrem Trägerelement 4, dem photolumineszenten Material 8 und der Abdeckung 6 angeordnet ist. Auf der Abdeckung 6 ist ein T-förmiger Stempel 2c' angeordnet, der im dem topfförmigen Körper 2a' gehalten ist. Der T-förmige Stempel 2c' besitzt einen Stempelkopf 3 und einen Stempelstiel 5. Über zwei paarweise vorstehende Vorsprünge 7 wird der Stempfelkopf 3 in dem topfförmigen Körper 2a' gehalten. Eingesetzt werden kann der T-förmige Stempel 2c' beispielsweise indem der topfförmige Körper 2a' aufgebogen wird und der Stempel eingesetzt wird. Alternativ ist es auch möglich, den T-förmigen Stempel in den topfförmigen Körper einzuschieben. Wie in Fig. 3B dargestellt, kann der topfförmige Körper 2a' mit abgerundeten Ecken E ausgebildet sein. Abgerundete Ecken verhindern ein Einreißen der Stützform während des Biegevorganges. Bevorzugt wird für die Stützform ein Silikon mit einem möglichst großen Ein- und Weiterreißwiderstand verwendet.

Die in Fig. 4 gezeigte, vorgefertigte Erstarrungsform 20 ist im Verhältnis zu der Stützform 2 wesentlicher stabiler ausgebildet und erlaubt vorzugsweise nur minimale Verformungsbewegungen aufgrund ihrer geringen Elastizität. Aufgrund der minimalen Elastizität kann die erwärmte Stützform 2 einfacher in die vorgefertigte Erstarrungsform 20 eingesetzt werden, so dass die Stützform 2 bei sicherem Halt und bei gleichmäßiger Fixierung abkühlen kann und die eingebrachte Fluchtwegmarkierung 4, 6, 8 erstarren kann und damit eine thermisch verformte Fluchtwegmarkierung gebildet ist. Nach dem Erstarren können die thermisch verformte Fluchtwegmarkierung 1 und die Stützform 2 aus der vorgefertigten Erstarrungsform 20 entnommen und voneinander getrennt werden. Der Vorgang des Abkühlens kann auch aktiv durch eine Kühlung, beispielsweise mit Luft, unterstützt werden.

Bei der Verwendung einer Umformungsvorrichtung 22 gemäß Fig. 5 wird die erwärmte Stützform 2 in die Umformvorrichtung 22 eingesetzt, wobei die Vielzahl an Stäben 24 zunächst entsprechend weit auseinander positioniert sind, so dass die Stützform 2 bequem in die Umformvorrichtung 22 eingesetzt werden kann. Mit dem Einsetzen der Stützform 2 in die Umformungsvorrichtung 22 können über die Steuereinheit 20 die Stäbe 24 in eine gewünschte Position verfahren werden, so dass die Stäbe 24 eine vordefinierte Verformung der Stützform definieren. Nach dem Einstellen der Stäbe 24 kann die Stützform 2 in der Umformungsvorrichtung 22 in ihrer Verformungsposition auskühlen, so dass eine Fluchtwegmarkierung 1 gemäß der durch die Stäbe 24 eingestellten Verformung gebildet wird. Nach dem Erstarren können die Stäbe 24 aus ihrer die Verformung bildende Position zurückgefahren werden, so dass die Stützform 2 bequem auf der Umformvorrichtung 22 entnommen werden kann. Da die Stützform 2 in ihre Ausgangslage zurückkehrt, kann die geformte Fluchtwegmarkierung 1 bequem aus der Stützform 2 entnommen werden. Alternativ ist auch denkbar, dass die Stützform 2 bereits vor ihrer Erwärmung in die Umformungsvorrichtung 22 eingesetzt und erst dort erwärmt wird, bevor die Stäbe 24 in die gewünschte Verformungsposition verfahren werden.

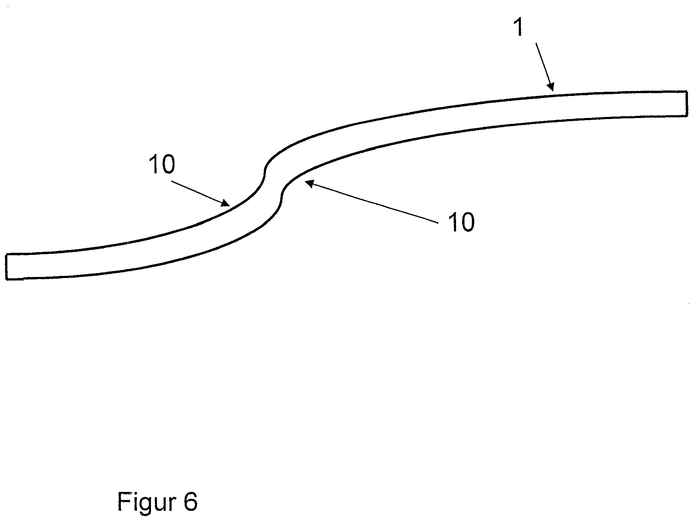

Fig. 6 zeigt beispielhaft die Draufsicht einer Fluchtwegmarkierung 1, die individuell in der Ebene verformt wurde, wobei zur Verformung die Stützform 2 in Verbindung mit der Erstarrungsform 20 gemäß Fig. 4 oder der Umformungsvorrichtung 22 gemäß Fig. 5 verwendet wurde. Die Fluchtwehmarkierung 1 gemäß Fig. 6 ist mit geschwungener Kontur ausgebildet, wobei geschwungen bedeutet, dass die Kontur der Fluchtwegmarkierung zwischen zwei entgegen gesetzten Krümmungen einen Wendepunkt aufweist.

Die Fluchtwegmarkierung 1 ist folglich mit einfachen Mitteln herstellbar und kann zugleich mit beliebiger Form hergestellt werden. Das erfindungsgemäße Verfahren zur Herstellung der Fluchtwegmarkierung 1 ist zudem mit einfachen Mitteln umzusetzen. Ferner können die verwendeten Mittel für das Verfahren zur Herstellung für eine Vielzahl an Fluchtwegmarkierungen wiederverwendet werden.

## Patentansprüche

1. Verfahren zum Herstellen einer Fluchtwegmarkierung (1) in einer erwärmbaren und verformbaren Stützform (2), wobei die Fluchtwegmarkierung (1) eine lichtdurchlässige Abdeckung (6), ein Trägerelement (4) und ein photolumineszentes Material (8) aufweist und das Verfahren die folgenden Schritte umfasst:
a. Bereitstellen der erwärmbaren und verformbaren Stützform (2),
b. Einbringen eines Trägerelements (4) in die Stützform (2),
c. Anordnen des photolumineszenten Materials (8) auf dem Trägerelement (4),
d. Anordnen der lichtdurchlässigen Abdeckung (6) auf dem Trägerelement (4)
e. Erwärmen und Verformen der Fluchtwegmarkierung (1) in der Stützform (2) und
f. Erstarren der Fluchtwegmarkierung (1) in der Stützform (2) in einer vorbestimmten Position.

2. Verfahren nach Anspruch 1 **dadurch gekennzeichnet, dass** das photolumineszente Material (8) und die lichtdurchlässige Abdeckung (6) auf dem Trägerelement (4) nacheinander in die Stützform (2) angeordnet werden oder diese bereits aufeinander angeordnet in die Stützform (2) eingebracht werden.

3. Verfahren nach Anspruch 1 oder 2, **dadurch gekennzeichnet, dass** die Stützform (2) aus Silikon gefertigt ist, wobei nach dem Erstarren in der Stützform (2) die Stützform (2) in ihre nicht verformte Ausgangslage zurückkehrt und die Fluchtwegmarkierung (1) in ihrer verformten Position verbleibt.

4. Verfahren nach einem der Ansprüche 1 bis 3, **dadurch gekennzeichnet, dass** zum Verformen und/oder Erstarren der in der Stützform (2) erwärmten Fluchtwegmarkierung (1) die Stützform (2) in einer Erstarrungsvorrichtung angeordnet wird.

5. Verfahren nach Anspruch 4, **dadurch gekennzeichnet, dass** die Erstarrungsvorrichtung als eine vorgefertigte Erstarrungsform (20) vorgesehen ist.

6. Verfahren nach Anspruch 4 oder 5, **dadurch gekennzeichnet, dass** die Erstarrungsvorrichtung als eine Umformungsvorrichtung (22) mit einer Steuereinheit (26) ausgebildet ist.

7. Verfahren nach Anspruch 6, **dadurch gekennzeichnet, dass** die Umformungsvorrichtung (22) eine Vielzahl parallel angeordneten Stäben (24) aufweist, welche durch die Steuereinheit (26) entlang ihrer Längsrichtung verschiebbar sind, um die Fluchtwegmarkierung (1) in die vorbestimmte Position zu bringen.

8. Verfahren nach Anspruch 6 oder 7, **dadurch gekennzeichnet, dass** nach dem Anordnen der erwärmten Stützform (2) in der Umformungsvorrichtung (22) die Stäbe (24) der Umformungsvorrichtung (22) in eine Stellung zum Erreichen einer gewünschten Verformung gebracht werden und die in die Stützform (2) eingebrachte Fluchtwegmarkierung (1) in dieser gewünschten Form erstarrt.

9. Verfahren nach einem der Ansprüche 1 bis 8, **dadurch gekennzeichnet, dass** die lichtdurchlässige Abdeckung (6) einen thermisch verformbaren Kunststoff, bevorzugt Polycarbonat, aufweist.

10. Verfahren nach einem der Ansprüche 1 bis 9, **dadurch gekennzeichnet, dass** das Trägerelement (4) und/oder das photolumineszente Material (8) und/oder die lichtdurchlässige Abdeckung (6) jeweils alleine oder zusammen aufeinanderliegend thermisch verformbar sind.

11. Vorrichtung zum Herstellen einer Fluchtwegmarkierung (1) nach einem der vorangehenden Ansprüche, **dadurch gekennzeichnet, dass**
- die Vorrichtung eine erwärmbare und verformbare Stützform (2) aufweist,
- in der die Fluchtwegmarkierung (1) mit ihrem Trägerelement (4), dem photolumineszenten Material (8) und der lichtdurchlässigen Abdeckung (6) anordenbar ist,
- die Vorrichtung eine Erstarrungsvorrichtung aufweist,
- wobei die Stützform (2) in der Erstarrungsvorrichtung einsetzbar ist.

12. Vorrichtung nach Anspruch 11, **dadurch gekennzeichnet, dass**
- die Erstarrungsvorrichtung als eine Umformungsvorrichtung (22) mit einer Steuereinheit ausgebildet ist,
- wobei die Umformungsvorrichtung (22) eine Vielzahl parallel angeordneter Stäbe aufweist, welche durch die Steuereinheit entlang ihrer Längsrichtung verschiebbar sind.

13. Vorrichtung nach einem der Ansprüche 11 oder 12, **dadurch gekennzeichnet, dass**
- die Stützform (2) aus Silikon gefertigt ist.

14. Vorrichtung nach einem der Ansprüche 11 bis 13, **dadurch gekennzeichnet, dass**
- die Stützform (2) einen topfförmigen Körper (2a) aufweist,

15. Vorrichtung nach Anspruch 14, **dadurch gekennzeichnet, dass** der topfförmige Körper (2a) abgerundete Ecken aufweist.

16. Vorrichtung nach Anspruch 14 oder 15, **dadurch gekennzeichnet, dass** die Stützform (2) einen Deckel (2b) mit einem stempelförmigen, hervorstehenden Teil (2c) aufweist.

17. Vorrichtung nach einem der Ansprüche 14 bis 16, **dadurch gekennzeichnet, dass**
- ein T-förmige Stempel (2c') einen Stempelkopf (3) und einen Stempelstiel (5) aufweist, wobei der Stempelkopf (3) über zwei paarweise vorstehende Vorsprünge (7) in dem topfförmigen Körper (2a) haltbar ist.

18. Fluchtwegmarkierung (1) hergestellt mit dem Verfahren nach einem der Ansprüche 1 bis 10, **dadurch gekennzeichnet, dass**
- die Fluchtwegmarkierung mindestens einen nicht linearen Streckenabschnitt mit einem oder mehreren Radien aufweist,
- die Fluchtwegmarkierung (1) eine lichtdurchlässige Abdeckung (6) und ein photolumineszentes Material aufweist,
- wobei das photolumineszente Material in Form von Streifen mit einer Länge und einer Breite vorgesehen ist, die den Abmaßen der lichtdurchlässigen Abdeckung (6) entsprechen,
- wobei der photolumineszente Streifen photolumineszente Pigmente aufweist, die in einer Silikonmatrix oder Polycarbonatmatrix eingebunden sind,
- wobei die lichtdurchlässige Abdeckung (6) thermisch verformbar ist,
- wobei in der lichtdurchlässigen Abdeckung (6) Farbpigmente zum lichtdurchlässigen Einfärben derselben eingebracht sind.

## Claims

1. A method to produce an escape route marking (1) in a heatable and deformable support mold (2), wherein the escape route marking (1) has a transparent cover (6), a support element (4) and a photoluminescent material (8), and the method comprises the following steps:
a. provide the heatable and deformable support mold (2),
b. insert a support element (4) into the support mold (2),
c. arrange the photoluminescent material (8) on the support element (4),
c. arrange the transparent cover (6) on the support element (4),
e. heat and shape the escape route marking (1) in the support mold (2) and
f. harden the escape route marking (1) in the support mold (2) in a predetermined position.

2. The method according to claim 1, **characterized in that** the photoluminescent material (8) and the transparent cover (6) on the support element (4) are arranged sequentially in the support mold (2), or they are introduced into the support mold (2) already arranged on each other.

3. The method according to claim 1 or 2, **characterized in that** the support mold (2) is made of silicone, wherein after hardening in the support mold (2), the support mold (2) is returned to its unshaped initial position, and the escape route marking (1) remains in its shaped position.

4. The method according to one of claims 1 to 3, **characterized in that** the support mold (2) is arranged in a hardening a device for shaping and/or hardening the escape route marking (1) heated in the support mold (2).

5. The method according to claim 4, **characterized in that** the hardening device is provided as a prefabricated hardening mold (20).

6. The method according to claim 4 or 5, **characterized in that** the hardening device is designed as a shaping device (22) with a control unit (26).

7. The method according to claim 6, **characterized in that** the shaping device (22) has a plurality of rods (24) which are arranged in parallel and which can be moved through the control unit (26) along their longitudinal direction in order to bring the escape route marking (1) into the predetermined position.

8. The method according to claim 6 or 7, **characterized in that** after the heated support mold (2) is arranged in the shaping device (22), the rods (24) of the shaping device (22) are moved into a position to achieve a desired shape, and the escape route marking (1) introduced into the support mold (2) hardens in this desired shape.

9. The method according to one of claims 1 to 8, **characterized in that** the transparent cover (6) has a plastic, preferably polycarbonate, which can be thermally deformed.

10. The method according to one of claims 1 to 9, **characterized in that** the support elements (4), and/or the photoluminescent material (8), and/or the transparent cover (6) are all thermally deformable by themselves or stacked together.

11. The device for producing an escape route marking (1) according to one of the preceding claims, **characterized in that**
- the device has a heatable and deformable support mold (2)
- in which the escape route marking (1) can be arranged with its support element (4), the photoluminescent material (8) and the transparent cover (6),
- the device has a hardening device,
- wherein the support mold (2) can be inserted in the hardening device.

12. The device according to claim 11, **characterized in that**
- the hardening device is designed as a shaping device (22) with a control unit,
- wherein the shaping device (22) has a plurality of rods arranged in parallel which can be moved through the control unit along their longitudinal direction.

13. The device according to one of claims 11 or 12, **characterized in that**
- the support mold (2) is made of silicone.

14. The device according to one of claims 11 to 13, **characterized in that**
- the support mold (2) has a pot-shaped body (2a).

15. The device according to claim 14, **characterized in that** the pot-shaped body (2a) has rounded corners.

16. The device according to claim 14 or 15, **characterized in that** the support mold (2) has a cover (2b) with a punch-shaped projecting part (2c).

17. The device according to one of claims 14 to 16, **characterized in that**
- a T-shaped punch (2c') has a punch head (3) and a punch stem (5), wherein the punch head (3) can be held in the pot-shaped body (2a) by two projections (7) that project in pairs.

18. An escape route marking (1) produced by the method according to one of claims 1 to 10, **characterized in that**
- the escape route marking has at least one nonlinear path section with one or more radii,
- the escape route marking (1) has a transparent cover (6) and a photoluminescent material,
- wherein the photoluminescent material is provided in the form of strips with a length and width that correspond to the dimensions of the transparent cover (6),
- wherein the photoluminescent strip has photoluminescent pigments that are incorporated in a silicone matrix or polycarbonate matrix, wherein the transparent cover (6) is thermally deformable, wherein color pigments are introduced into the transparent cover (6) for transparently coloring the same.

## Revendications

1. Procédé pour réaliser un marquage de chemin de fuite (1) dans un moule chauffable et déformable (2), dans lequel le marquage de chemin de fuite (1) comporte un recouvrement transparent (6), un élément de support (4) et un matériau photoluminescent (8), le procédé comprenant les étapes suivantes :
a. Mise à disposition du moule chauffable et déformable (2),
b. Insertion d'un élément de support (4) dans le moule (2),
c. Disposition du matériau photoluminescent (8) sur l'élément de support (4),
d. Disposition du recouvrement transparent (6) sur l'élément de support (4),
e. Chauffage et déformation du marquage de chemin de fuite (1) dans le moule (2), et
f. Solidification du marquage de chemin de fuite (1) dans le moule (2) dans une position prédéfinie.

2. Procédé selon la revendication 1, **caractérisé en ce que** le matériau photoluminescent (8) et le recouvrement transparent (6) sont disposés l'un après l'autre dans le moule (2) ou **en ce que** ceux-ci sont insérés dans le moule (2) en étant déjà disposés l'un sur l'autre.

3. Procédé selon la revendication 1 ou 2, **caractérisé en ce que** le moule (2) est constitué de silicone, le moule (2) reprenant sa forme initiale non déformée après la solidification dans le moule (2), et le marquage de chemin de fuite (1) demeurant dans sa position déformée.

4. Procédé selon l'une des revendications 1 à 3, **caractérisé en ce que** pour déformer et/ou solidifier le marquage de chemin de fuite (1) chauffé dans le moule (2), le moule (2) est disposé dans un dispositif de solidification.

5. Procédé selon la revendication 4, **caractérisé en ce que** le dispositif de solidification est fourni comme un moule de solidification préfabriqué (20).

6. Procédé selon la revendication 4 ou 5, **caractérisé en ce que** le dispositif de solidification est conçu comme un dispositif de formage (22) avec une unité de commande (26).

7. Procédé selon la revendication 6, **caractérisé en ce que** le dispositif de formage (22) comporte une pluralité de tiges (24) disposées parallèlement, lesquelles peuvent coulisser le long de leur direction longitudinale à l'aide de l'unité de commande (26), afin de mettre le marquage de chemin de fuite (1) dans la position prédéfinie.

8. Procédé selon la revendication 6 ou 7, **caractérisé en ce que** suite à la disposition du moule chauffé (2) dans le dispositif de formage (22), les tiges (24) du dispositif de formage (22) sont mises dans une position permettant d'atteindre une déformation souhaitée, et le marquage de chemin de fuite (1) inséré dans le moule (2) est solidifié dans cette forme souhaitée.

9. Procédé selon l'une des revendications 1 à 8, **caractérisé en ce que** le recouvrement transparent (6) comporte une matière thermoplastique, de préférence du polycarbonate.

10. Procédé selon l'une des revendications 1 à 9, **caractérisé en ce que** l'élément de support (4) et/ou le matériau photoluminescent (8) et/ou le recouvrement transparent (6) peuvent être déformés thermiquement séparément ou conjointement tout en étant superposés les uns aux autres.

11. Dispositif pour réaliser un marquage de chemin de fuite (1) selon l'une des revendications précédentes, **caractérisé en ce que**
- le dispositif comporte un moule chauffable et déformable (2),
- dans lequel le marquage de chemin de fuite (1) peut être disposé avec son élément de support (4), le matériau photoluminescent (8) et le recouvrement transparent (6),
- le dispositif comporte un dispositif de solidification,
- le moule (2) pouvant être inséré dans le dispositif de solidification.

12. Dispositif selon la revendication 11, **caractérisé en ce que**
- le dispositif de solidification est conçu comme un dispositif de formage (22) avec une unité de commande,
- le dispositif de formage (22) comportant une pluralité de tiges disposées parallèlement, lesquelles peuvent coulisser le long de leur direction longitudinale à l'aide de l'unité de commande.

13. Dispositif selon l'une des revendications 11 ou 12, **caractérisé en ce que**
- le moule (2) est constitué de silicone.

14. Dispositif selon l'une des revendications 11 à 13, **caractérisé en ce que**
- le moule (2) comporte un corps en forme de pot (2a).

15. Dispositif selon la revendication 14, **caractérisé en ce que** le corps en forme de pot (2a) présente des coins arrondis.

16. Dispositif selon la revendication 14 ou 15, **caractérisé en ce que** le moule (2) comporte un couvercle (2b) avec une partie saillante en forme de tampon (2c).

17. Dispositif selon l'une des revendications 14 à 16, **caractérisé en ce que**
- un tampon en forme de T (2c') comporte une tête de tampon (3) et un manche de tampon (5), la tête de tampon (3) pouvant être maintenue dans le corps en forme de pot (2a) par deux saillies faisant saillie par paire (7).

18. Marquage de chemin de fuite (1) réalisé à l'aide du procédé selon l'une des revendications 1 à 10, **caractérisé en ce que**
- le marquage de chemin de fuite comporte au moins un tronçon non linéaire avec un ou plusieurs rayons,
- le marquage de chemin de fuite (1) comporte un recouvrement transparent (6) et un matériau photoluminescent,
- dans lequel le matériau photoluminescent est fourni sous forme de bandes présentant une longueur et une largeur,
- dans lequel les bandes photoluminescentes présentent des pigments photoluminescents, lesquels sont intégrés dans une matrice de silicone ou une matrice de polycarbonate,
- dans lequel le recouvrement transparent (6) peut être déformé thermiquement,
- dans lequel des pigments colorés sont intégrés dans le recouvrement transparent (6) pour une coloration en transparence de celui-ci.
